(19) Europäisches Patentamt
European Patent Office
Office européen des brevets

(11) **EP 4 521 198 A2**

(12) **EUROPEAN PATENT APPLICATION**

(43) Date of publication:
**12.03.2025   Bulletin 2025/11**

(21) Application number: **24199538.0**

(22) Date of filing: **10.09.2024**

(51) International Patent Classification (IPC):
**G06F 1/3203** (2019.01)      **G06F 1/3206** (2019.01)
**G06F 1/3209** (2019.01)      **G06F 1/3228** (2019.01)
**G06F 1/324** (2019.01)       **G06F 1/3234** (2019.01)
**G06F 1/3287** (2019.01)      **G06F 9/48** (2006.01)
**G06F 9/50** (2006.01)        **G06N 20/00** (2019.01)
**H04L 12/10** (2006.01)       **H04L 12/40** (2006.01)
**H04L 41/00** (2022.01)       **H04L 43/00** (2022.01)

(52) Cooperative Patent Classification (CPC):
**G06F 1/3203; G06F 1/3206; G06F 1/3209;
G06F 1/3228; G06F 1/324; G06F 1/3243;
G06F 1/3287; G06F 9/4893; G06F 9/505;
G06F 9/5094; G06N 20/00; H04L 12/00;
H04L 12/10; H04L 12/40039; H04L 12/40045;**
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **11.09.2023   IN 202341060929
28.06.2024   US 202418759485**

(71) Applicant: **Juniper Networks, Inc.
Sunnyvale, CA 94089 (US)**

(72) Inventors:
• **KOMMULA, Raja
Sunnyvale, 94089 (US)**
• **SUNKADA, Ganesh Byagoti Matad
Sunnyvale, 94089 (US)**
• **SRIDHAR, Thayumanavan
Sunnyvale, 94089 (US)**
• **YAVATKAR, Raj
Sunnyvale, 94089 (US)**

(74) Representative: **D Young & Co LLP
3 Noble Street
London EC2V 7BQ (GB)**

(54) **CARBON-AWARE INTELLIGENT POWER MANAGER FOR CLUSTER NODES**

(57)     Example power management devices and techniques are described. An example computing device include one or more memories and one or more processors. The one or more processors are configured to determine, based on executing of at least one machine learning model, a measure of node criticality for a node of a cluster. The one or more processors are configured to determine, based on the measure of node criticality, a power savings measure of one or more power savings measures to be applied to the node. The one or more processors are configured to apply the power savings measure to the node.

FIG. 6

**(Cont. next page)**

(52) Cooperative Patent Classification (CPC): (Cont.)
**H04L 41/00; H04L 43/00; H04W 52/00;**
G06F 2209/5019

**Description**

This application claims the benefit of US Patent Application No. 18/759,485, filed 28 June 2024, which claims the benefit of IN Provisional Patent Application No. 202341060929, filed 11 September 2023, the entire content of each application is incorporated herein by reference.

**TECHNICAL FIELD**

This disclosure relates to computer networks and, more specifically, to computer networks having at least a portion of energy requirements met by renewable energy sources.

**BACKGROUND**

In a typical cloud data center environment, there is a large collection of interconnected servers that provide computing and/or storage capacity to run various applications. For example, a data center may comprise a facility that hosts applications and services for subscribers, e.g., customers of the data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

As data centers become larger, energy usage by the data centers increases. Some large data centers require a significant amount of power (e.g., around 100 megawatts), which is enough to power a large number of homes (e.g., around 80,000). Data centers may also run application workloads that are compute and data intensive, such as crypto mining and machine learning applications, that consume a significant amount of energy. As energy use has risen, customers of data centers and data center providers themselves have become more concerned about meeting energy requirements through the use of renewable (e.g., green) energy sources, as opposed to non-renewable, carbon emitting, fossil fuel-based (e.g., non-green) energy sources. As such, some service level agreements (SLAs) associated with data center services include green energy goals or requirements.

**SUMMARY**

In general, techniques are described for power management and workload scheduling and scaling to address concerns regarding the use of green and non-green energy sources. Currently, to maintain the greenness of the cluster or a data center, an administrator may configure SLAs for carbon (e.g., $CO_2$) emission. To meet $CO_2$ emission SLAs, a cluster controller may shut down high $CO_2$ emitting cluster compute nodes or put such nodes into power savings modes like sleep modes, or the like. As such, non-renewable energy powered nodes may be selected more often than renewable energy powered nodes for power savings in order to bring down emissions. These emission reducing measures may be manually applied by an administrator or may be automated. However, such actions to address $CO_2$ emission SLAs may impact service availability or scalability SLA requirements of the workloads running in the cluster. For example, when a cluster node is shutdown, a service may lose a standby replica used to maintain availability of the service. Such actions to address $CO_2$ emissions SLAs may also impact service scalability SLA requirements. For example, when a cluster node is shutdown, a service running on that cluster may not be able to scale up to a needed number of replicas. Moreover, taking such actions to address $CO_2$ emissions SLAs may cause service disruptions due to shutdown and restart of cluster nodes.

As such, it may be desirable to adaptively reduce $CO_2$ emission associated with cluster nodes while maintaining workload scalability and availability SLAs. For example, a network controller may apply any power saver or carbon reduction measures at times when there is less demand for scalability and availability in near future. In some examples, the network controller may execute one or more machine learning models to predict cluster workload scalability and availability demands. The network controller may take $CO_2$ emission reduction actions when the predicted cluster workload scalability and availability demands are relatively low. In this manner, the techniques of this disclosure may reduce $CO_2$ emissions associated with a cluster node, while maintaining workload scalability and availability SLAs.

In one example, this disclosure describes a computing system including one or more memories and one or more processors communicatively coupled to the one or more memories, the one or more processors being configured to: determine, based on executing at least one machine learning model, a measure of node criticality for a node of a cluster; determine, based on the measure of node criticality, a power savings measure of one or more power savings measures to be applied to the node; and apply the power savings measure to the node.

In another example, this disclosure describes a method including: determining, by one or more processors and based on executing of at least one machine learning model, a measure of node criticality for a node of a cluster;

determining, by the one or more processors and based on the measure of node criticality, a power savings measure of one or more power savings measures to be applied to the node; and applying, by the one or more processors, the power savings measure to the node.

In another example, this disclosure describes computer-readable media storing instructions which, when executed, cause one or more processors to: determine, based on executing of at least one machine learning model, a measure of node criticality for a node of a cluster; determine, based on the measure of node criticality, a power savings measure of one or more power savings measures to be applied to the node; and apply the power savings measure to the node.

The details of one or more examples of this disclosure are set forth in the accompanying drawings and the description below. Other features, objects, and advantages will be apparent from the description and drawings, and from the claims.

BRIEF DESCRIPTION OF DRAWINGS

FIG. 1 is a block diagram illustrating an example network system having a data center in which examples of the techniques described herein may be implemented.

FIG. 2 is a block diagram illustrating an example computing device according to techniques described herein.

FIG. 3 is a conceptual diagram illustrating example prediction and re-scheduling techniques according to one or more aspects of this disclosure.

FIG. 4 is a block diagram illustrating an example cluster controller and a plurality of nodes according to one or more aspects of this disclosure.

FIG. 5 is a flow diagram illustrating example techniques for power management of cluster nodes according to one or more aspects of this disclosure.

FIG. 6 is a flow diagram illustrating other example techniques for power management of cluster nodes according to one or more aspects of this disclosure.

Like reference characters denote like elements throughout the description and figures.

DETAILED DESCRIPTION

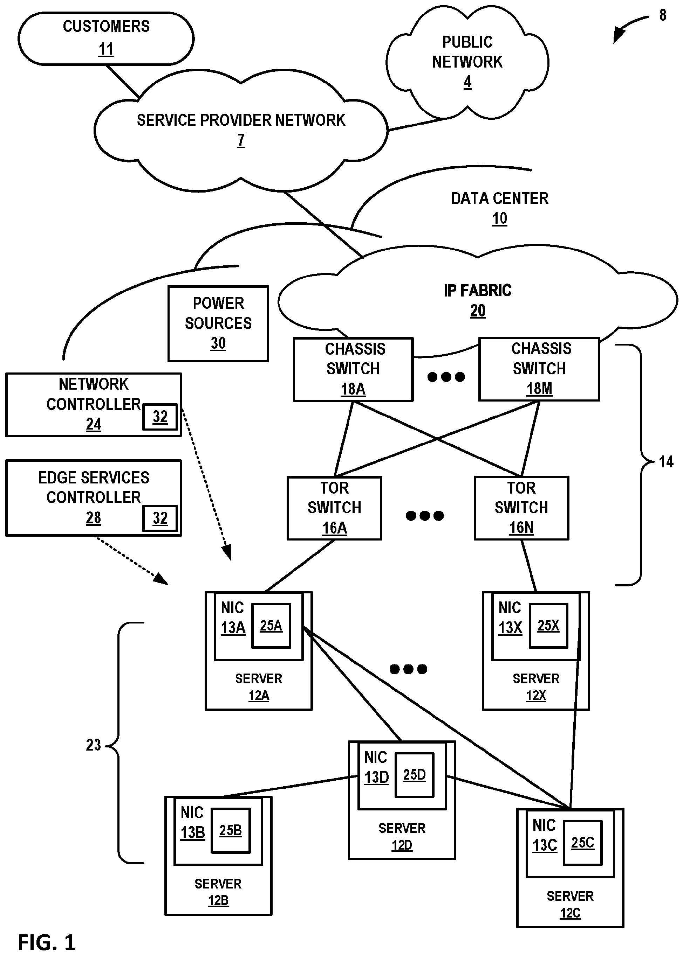

FIG. 1 is a block diagram illustrating an example system 8 having computing infrastructure in which examples of the carbon-aware intelligent power manager for cluster nodes techniques described herein may be implemented. In general, data center 10 provides an operating environment for applications and services for one or more customer sites 11 (illustrated as "customers 11") having one or more customer networks coupled to the data center by service provider network 7. Data center 10 may, for example, host infrastructure equipment, such as networking and storage systems, redundant power supplies, and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for a Network Function Virtualization (NFV) architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

In some examples, servers 12 each may include at least one network interface card (NIC) of NICs 13A-13X (collectively, "NICs 13"), which each include at least one port with which to exchange packets send and receive packets over a communication link. For example, server 12A includes NIC 13A. NICs 13 provide connectivity between the server and the switch fabric. In some examples, NIC 13 includes an additional processing unit in the NIC itself to offload at least some of the processing from the host CPU (e.g., the CPU of the server that includes the NIC) to the NIC, such as for performing policing and other advanced functionality, known as the "datapath."

In some examples, each of NICs 13 provides one or more virtual hardware components for virtualized input/output (I/O). A virtual hardware component for I/O may be a virtualization of a physical NIC 13 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interface cards as "virtual functions" for use by respective endpoints executing on the server 12. In this way, the virtual network endpoints may share the same PCIe physical hardware resources and the virtual functions are examples of virtual hardware components. As another example, one or more servers 12 may implement Virtio, a para-virtualization framework available, e.g., for the Linux Operating System, that provides emulated NIC functionality as a type of virtual hardware component. As another example, one or more servers 12 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, including the illustrated example of FIG. 1, one or more of NICs 13 may include multiple ports. NICs 13 may be connected to one another via ports of NICs 13 and communications links to form a NIC fabric 23 having a NIC fabric topology. NIC fabric 23 is the collection of NICs 13 connected to at least one other NIC 13.

In some examples, NICs 13 each include a processing unit to offload aspects of the datapath. The processing unit in the NIC may be, e.g., a multi-core ARM processor with hardware acceleration provided by a Data Processing Unit (DPU), Field Programmable Gate Array (FPGA), and/or an ASIC. NICs 13 may alternatively be referred to as SmartNICs or GeniusNICs.

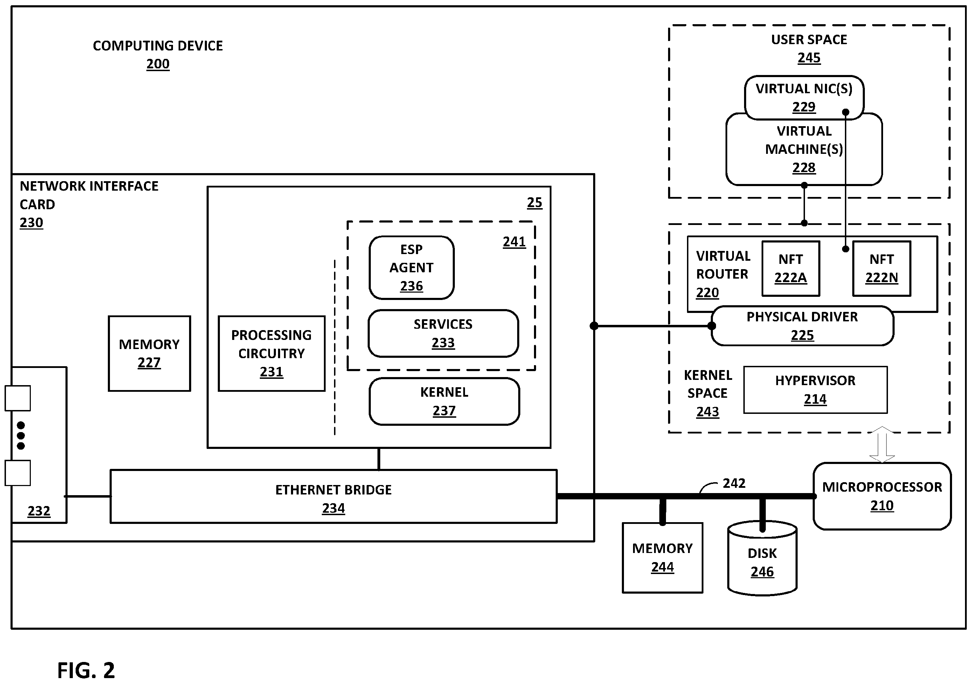

Edge services controller 28 may manage the operations of the edge services platform within NIC 13s in part by orchestrating services (e.g., services 233 as shown in FIG. 2) to be performed by processing units 25; application programming interface (API) driven deployment of services 233 on NICs 13; NIC 13 addition, deletion and replacement within the edge services platform; monitoring of services 233 and other resources on NICs 13; and management of connectivity between various services 233 running on the NICs 13.

Edge services controller 28 may communicate information describing services available on NICs 13, a topology of NIC fabric 13, or other information about the edge services platform to an orchestration system (not shown) or network controller 24. Example orchestration systems include OpenStack, vCenter by VMWARE, or System Center by MICROSOFT. Example network controllers 24 include a controller for Contrail by JUNIPER NETWORKS or Tungsten Fabric. Additional information regarding a controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent Application No. 14/226,509, filed March 26, 2014, and entitled "Tunneled Packet Aggregation for Virtual Networks," each of which is incorporated by reference as if fully set forth herein.

In some examples, network controller 24 or edge services controller 28 may determine the energy efficiency and/or usage of data center 10 and/or the energy efficiency and/or usage of data center 10 when deploying an application workload, and may invoke one or more actions to improve energy efficiency (e.g., save energy) of data center 10. In some examples, network controller 24 or edge services controller 28 determines the energy efficiency and/or usage of data center 10 for workloads running on servers 12 and/or NICs 13. In some examples, network controller 24, edge services controller 28, and/or other device(s) of FIG. 1 may determine the type of energy usage, such as an amount of green energy usage and an amount of non-green energy usage associated with data center 10, a given service, a given workload, a given node, a given cluster of nodes, or the like.

Cluster controller 32, which may be implemented in network controller 24 and/or edge services controller 28 may control a cluster of nodes. In some examples, cluster controller 32 may represent a carbon-aware intelligent power manager for cluster nodes according to the techniques of this disclosure.

In the example of FIG. 1, data center 10 may obtain energy from one or more power sources 30 for data center 10. While shown inside data center 10, it should be understood that power generating equipment for power sources 30 may be located outside of data center 10. For example, a windmill or powerplant may be located outside of data center 10, but power from the windmill or powerplant may be available in data center 10 via power sources 30. Power sources 30 may include renewable (green) energy sources, non-renewable (non-green) energy sources, or a combination of renewable and non-renewable energy sources.

For example, any of servers 12 or NICs 13 may be referred to as nodes. Any combination of nodes may for a cluster, that may be controlled by cluster controller 32. As further described below, cluster controller 32 may determine, based on executing at least one machine learning model, a measure of node criticality for a node of a cluster. For example, cluster controller 32 may determine a measure of node criticality for server 12A for a cluster of server 12A and NIC 13D. Cluster controller 32 may determine, based on the measure of node criticality, a power savings measure of one or more power savings measures to be applied to the node. For example, cluster controller may determine to apply a specific power savings measure to server 12A based on the measure of node criticality. Cluster controller 32 may apply the power savings measure to the node, e.g., server 12A.

FIG. 2 is a block diagram illustrating an example computing device according to techniques described herein. Computing device 200 of FIG. 2 may represent network controller 24, edge services controller 28, or may represent an example instance of any of servers 12 of FIG. 1. Computing device 200 includes in this example, a bus 242 coupling hardware components of a computing device 200 hardware environment. Bus 242 couples SR-IOV-capable network interface card (NIC) 230, storage disk 246, and microprocessor 210. A frontside bus may in some cases couple microprocessor 210 and memory device 244. In some examples, bus 242 may couple memory device 244, microprocessor 210, and NIC 230. Bus 242 may represent a Peripheral Component Interface (PCI) express (PCIe) bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Memory device 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Main memory 244 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between the NIC 230 and other devices coupled to bus 242 may read/write from/to the memory 227.

Memory device 244, NIC 230, storage disk 246, and microprocessor 210 provide an operating environment for a software stack that executes a hypervisor 214 and one or more virtual machines 228 managed by hypervisor 214.

In general, a virtual machine provides a virtualized/guest operating system for executing applications in an isolated virtual environment. Because a virtual machine is virtualized from physical hardware of the host server, executing applications are isolated from both the hardware of the host and other virtual machines.

An alternative to virtual machines is the virtualized container, such as those provided by the open-source DOCKER Container application. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, containers may require less processing power, storage, and network resources than virtual machines. As used herein, containers may also be referred to as virtualization engines, virtual private servers, silos, or jails. In some instances, the techniques described herein with respect to containers and virtual machines or other virtualization components.

While virtual network endpoints in FIG. 2 are illustrated and described with respect to virtual machines, other operating environments, such as containers (e.g., a DOCKER container) may implement virtual network endpoints. An operating system kernel (not shown in FIG. 2) may execute in kernel space 243 and may include, for example, a Linux, Berkeley Software Distribution (BSD), another Unix-variant kernel, or a Windows server operating system kernel, available from MICROSOFT.

Computing device 200 executes a hypervisor 214 to manage virtual machines 228 of user space 245. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM).

Virtual machines 228 may host one or more applications, such as virtual network function instances. In some examples, a virtual machine 228 may host one or more VNF instances, where each of the VNF instances is configured to apply a network function to packets.

Hypervisor 214 includes a physical driver 225 to use the physical function 221 provided by network interface card 230. In some cases, network interface card 230 may also implement SR-IOV to enable sharing the physical network function (I/O) among virtual machines. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to each of the virtual machines as a dedicated NIC. Virtual functions may represent lightweight PCIe functions that share physical resources with the physical function and with other virtual functions. NIC 230 may have thousands of available virtual functions according to the SR-IOV standard, but for I/O-intensive applications the number of configured virtual functions is typically much smaller.

Virtual machines 228 include respective virtual NICs 229 presented directly into the virtual machine 228 guest operating system, thereby offering direct communication between NIC 230 and the virtual machine 228 via bus 242, using the virtual function assigned for the virtual machine. This may reduce hypervisor 214 overhead involved with software-based, VIRTIO and/or vSwitch implementations in which hypervisor 214 memory address space of memory device 244 stores packet data and packet data copying from the NIC 230 to the hypervisor 214 memory address space and from the hypervisor 214 memory address space to the virtual machines 228 memory address space consumes cycles of microprocessor 210.

NIC 230 may further include a hardware-based Ethernet bridge 234 (which may include an embedded switch). Ethernet bridge 234 may perform layer 2 forwarding between virtual functions and physical functions of NIC 230. Ethernet bridge 234 thus in some cases provides hardware acceleration, via bus 242, of inter-virtual machine packet forwarding and of packet forwarding between hypervisor 214, which accesses the physical function via physical driver 225, and any of the virtual machines. Ethernet bridge 234 may be physically separate from processing unit 25.

Computing device 200 may be coupled to a physical network switch fabric that includes an overlay network that extends switch fabric from physical switches to software or "virtual" routers of physical servers coupled to the switch fabric, including virtual router 220. Virtual routers may be processes or threads, or a component thereof, executed by the physical servers, e.g., servers 12 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of virtual router may be performed as one of services 233.

In the example computing device 200 of FIG. 2, virtual router 220 executes within hypervisor 214 that uses physical function 221 for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. A virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machines 228 and virtual network controller, such as controller 24. For example, a virtual machine may request to send a message using its virtual address via the VN agent, and VN agent may in turn send the message and request that a response to the message be received for the virtual address of the virtual machine that originated the first message. In some cases, a virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), VxLAN, Multiprotocol Label Switching (MPLS) over GRE, MPLS over User Datagram Protocol (UDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for N virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

An edge services platform leverages processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs). DPUs may be examples of processing unit 25.

In the example NIC 230, processing unit 25 executes an operating system kernel 237 and a user space 241 for services. Kernel may be a Linux kernel, a Unix or BSD kernel, a real-time operating system (OS) kernel, or other kernel for managing hardware resources of processing unit 25 and managing user space 241.

Services 233 may include network, security, storage, data processing, co-processing, machine learning or other services, such as energy efficiency services, in accordance with techniques described in this disclosure. Processing unit 25 may execute services 233 and edge service platform (ESP) agent 236 as processes and/or within virtual execution elements such as containers or virtual machines. As described elsewhere herein, services 233 may augment the processing power of the host processors (e.g., microprocessor 210) by, e.g., enabling the computing device 200 to offload packet processing, security, or other operations that would otherwise be executed by the host processors.

Processing unit 25 executes edge service platform (ESP) agent 236 to exchange data and control data with an edge services controller for the edge service platform. While shown in user space 241, ESP agent 236 may be a kernel module 237 in some instances.

As an example, ESP agent 236 may collect and send, to the ESP controller, telemetry data generated by services 233, the telemetry data describing traffic in the network, computing device 200 or network resource availability, resource availability of resources of processing unit 25 (such as memory or core utilization), and/or resource energy usage. As another example, ESP agent 236 may receive, from the ESP controller, service code to execute any of services 233, service configuration to configure any of services 233, packets or other data for injection into the network.

Edge services controller 28 manages the operations of processing unit 25 by, e.g., orchestrating and configuring services 233 that are executed by processing unit 25; deploying services 233; NIC 230 addition, deletion and replacement within the edge services platform; monitoring of services 233 and other resources on NIC 230; and management of connectivity between various services 233 running on NIC 230. Example resources on NIC 230 include memory 227 and processing circuitry 231. In some examples, edge services controller 28 may invoke one or more actions to improve energy usage of data center 10 via managing the operations of processing unit 25. In some examples, edge services controller 28 may set a target green quotient for processing unit 25 that causes processing unit 25 to select or adjust a particular routing or tunnel protocol, particular algorithm, maximum transmission unit (MTU) size, interface, and/or any of services 233.

In some examples, virtual machine(s) 228 may execute a number of different workloads, for example, workloads of a plurality of services. Cluster controller 32 may obtain telemetry data, including workload data, of computing device 200. Cluster controller 32 may use the workload data to predict a number of workloads to be scheduled during a prediction window of time. Cluster controller 32 may use the predicted number of workloads when determining a node criticality of computing device 200 and/or determining a power savings measure to apply to computing device 200.

A carbon-aware intelligent power manager for cluster nodes, such as cluster controller 32, is now discussed. Currently, when greenness and carbon emission rates of Kubernetes clusters and/or data centers are failing to meet configured SLA greenness threshold values, some of the cluster nodes of Kubernetes cluster may be put into various levels of power savings modes to bring down carbon emission rates and increase greenness of the cluster or data center. Generally, the cluster nodes are identified for moving into power savings modes based on their power source type and carbon emission rate. The power source type may include renewable (green) or non-renewable (non-green) energy sources.

Often, cluster nodes which are powered by non-renewable energy or having a higher carbon emission rate are selected for placing into power savings modes. The selected cluster nodes may be placed into power savings modes for some definite amount of time until carbon emission and greenness level SLA thresholds are met. Such an approach may cause a number of problems. First, the approach may impact service scalability or availability SLA requirements of the workloads running in the cluster. For example, when some cluster nodes are shut down, one or more services may lose a standby replica which may be used to maintain availability. Second, the approach may impact service scalability SLA requirements. For example, when some cluster nodes are shut down, some of the services may not be able to scale up to a configured maximum number of replicas. Third, the shut down and start up of cluster nodes may cause service disruptions.

To overcome such issues and according to the techniques of this disclosure, when carbon emission, scalability, and availability SLAs are to be met at the cluster and data center level, various power savings actions may be applied to cluster nodes at different levels. For example, a high carbon emission cluster node may be put into sleep mode or simply removed from node pools of the workload scheduler for some relatively short duration. Such power savings actions may have less impact on the scalability and availability of the cluster workloads. For example, the action of moving a high carbon emission cluster node into a sleep mode for some duration may be taken such that the action does not stop a service from scaling up to meet a scalability SLA.

For example, the techniques of this disclosure may include periodically predicting measures of node criticality (e.g., weights) for a plurality of cluster nodes to indicate to a cluster manager that nodes having higher predicted weights will have lesser impact on scalability and availability and/or vice-versa. That means a relatively high degree of power savings measures may be taken on a cluster node having relatively higher weights.

The techniques of this disclosure may periodically predict weights for the nodes for the next prediction window of some preconfigured duration. In a way, the predicted weight of the node may indicate the level of power savings actions that may be applied to the node for the prediction window. For example, when weight of a first node is 8 and a second node is 3 in a scale of 10, the first node may have options for more impactful or hard power savings measures, like moving the node to a sleep or hibernation mode. The second node may have options less impactful or soft power savings measures, like no new service schedules to the node for next 10 minutes.

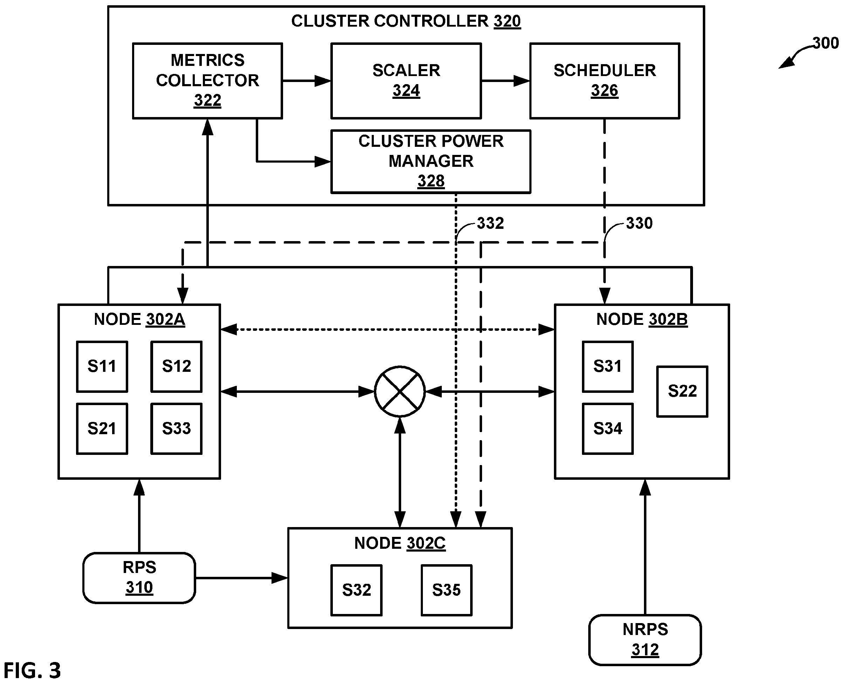

FIG. 3 is a block diagram illustrating an example three node cluster implementing the carbon-aware cluster power manager techniques of this disclosure. While three node cluster 300 in the example of FIG. 3 includes three nodes, the techniques of this disclosure may be used on a cluster of any number of nodes. Cluster controller 320 may include metrics collector 322, scaler 324, and scheduler 326. Cluster controller 320 may be implemented on network controller 24, edge services controller 28, and/or any other device capable of functioning as cluster controller 320.

Node 302A may be powered by renewable (green) power source 310 and may be referred to as a green node. Node 302A may execute a number of workloads as depicted by service 1 workload 1 (S11), service 1 workload 2 (S12), service 2 workload 1 (S21), and service 3 workload 3 (S33). Workloads of a service may sometimes be referred to as replicas. The workloads shown as being implemented on nodes 302A and 302B are shown as examples and different numbers or types of workloads may be implemented than those shown.

Node 302B may be powered by non-renewable power source 312 and may be referred to as a non-green or black node. Node 302B may execute workloads as depicted by service 2 workload 2 (S22), service 3 workload 1 (S31), and service 3 workload 4 (S34). Node 302C may also be powered by renewable power source 310 and may be referred to as a green node. Node 302C may execute workloads as depicted by service 3 workload 2 (S32) and service 3 workload 5 (S35).

Metrics collector 322 may collect metrics from node 302A, node 302B, and node 302C. For example, metrics collector 322 may collect emission metrics (e.g., nodes may report emissions attributed to the node per unit of time), workload metrics, information regarding the capabilities of a node, usage information regarding the node, etc.

Scaler 324 may determine a scaling of services 1-3, such as how many workload replicas each service may require and/or how many standby replicas each service may require, based on metrics collected by metrics collector 322. Scheduler 326 may schedule 330 the spawning and/or destruction of workload replicas based on the output of scaler 324.

According to the techniques of this disclosure, cluster controller 320 may adaptively reduce the carbon emission of cluster nodes (e.g., nodes 302A-302C) while maintaining workload scalability and availability SLAs associated with services 1-3.

For example, cluster controller 320 may apply any power savings measures 332 or carbon reduction measures at times when there is less demand for scalability and availability in the future (e.g., in the next hour or next T minutes). Such power savings measures 332 may include shutting down a node, moving a node into a sleep mode, changing a power level of a node, etc. In some examples, a user may program which power savings measures are available to be used. For example, cluster power manager 328 may apply power savings measures 332 to any of nodes 302A-302C.

For example, cluster power manager 328 may apply one or more forecasting machine learning models to predict cluster workload scalability and availability demands. Such forecasting machine learning model(s) may be trained using historical cluster workload schedule metrics. Because the cluster total workload count may vary with time due to scale and/or availability demands, a machine learning model may predict future workload count based on historical cluster workload schedule metrics.

Cluster power manager 328 may, when a predicted scale and availability demand is low, select one or more nodes (e.g., of nodes 302A-302C) to which to apply power savings measures 332 to improve the $CO_2$ emissions of the node(s), of the cluster, or of a given service. For example, cluster power manager 328 may determine a criticality factor of each node of the cluster of nodes. The criticality factor may be a measure of how critical each node to cluster at a given time. For example, cluster power manager 328 may determine the criticality attribute of a node is based on the need of the node for the immediate upcoming scale and availability requirement of cluster workloads.

For example, if the machine learning model predicts that a higher number of workloads are going to be scaled up in the next hour than are going to be destroyed (e.g., the overall number of workloads is going to increase), then it may be likely that every node of the cluster is going to be needed by the scheduler 326 and cluster power manager 328 may avoid taking power savings measures 332 during that next hour.

In some examples, cluster power manager 328 may utilize one or more machine learning based prediction algorithm(s) to predict cluster node metrics for the configured time window. In some examples, predicted cluster node metrics may include: a) Server Utilization (SU) of cluster nodes (e.g., the utilization percentage of node resources against the capacity of the node); b) Carbon Emission Rate (CER) of cluster nodes (e.g., the carbon emission caused by or attributed to the cluster node per hour or minute); c) a Workload Scale Factor (WSF) (e.g., how many service replicas are going to be spawned in the next configured time window of t minutes/hours/days); and/or d) a Workload Availability Factor (WAF) (e.g., how many standby replicas are going to be spawned in the next configured time window of t minutes/hours/-days).

For example, cluster power manager 328 may execute a machine learning model to predict that a service workload S 1 may scale up to 10 service replicas distributed across 5 nodes of 3 geographical zones (when a cluster is a regional cluster) in next 2 hours. Using the predicted scalability and availability metrics, node dependency factor metrics may be determined as follows: a) Node Scalability Dependency Factor (NSDF) (e.g., how many workloads will need this node in the next time period or window of 'T' hours/minutes/days to achieve their scalability goals which may be calculated as NSDF = Number of workloads needing the node / Total number of workloads of the cluster); and/or b) Node Availability Dependency Factor (NADF) (e.g., how many workloads will need this node in the next time period or window of 'T' hours/minutes/days to achieve their availability goals which may be calculated as NADF = Number of workloads needing the node / Total number of workloads of the cluster). In some examples, the total number of workloads of the cluster used to determine NSDF and NADF is a total current number of workloads of the cluster. In other examples, the total number of workloads of the cluster used to determine NSDF and NADF is a predicted total number of workloads of the cluster for the next time period.

Using the above predicted metrics, a weight metric called 'Node Power Saver Level (NPSL)' may be predicted for all the cluster nodes. The power saver level metric of a node may indicate: a) a level of power savings actions applied to a cluster node, with the higher the level, hard power savings actions may be applied and/or vice-versa; and/or b) an extent the cluster workloads need the cluster node for the next configured time window.

Based on these weights, cluster power manager 328 may place predicted cluster nodes into different levels of power savings modes. In some examples, cluster controller 320 may: 1. Shutdown of one or more NIC cards of the node; 2. Lower the frequency of one or more of the CPU cores of the node; and/or 3. Move one or more of the CPU cores of the node into different power optimized CPU states called C-states. In a C-state, a CPU may shut down one or more unused components in order to save power.

The machine learning model(s) of this disclosure may be trained based on historical metrics data of the cluster or of a larger number of clusters. As the machine learning model(s) are used, the machine learning model(s) may be further trained after each iteration of use. In some examples, the training is unsupervised.

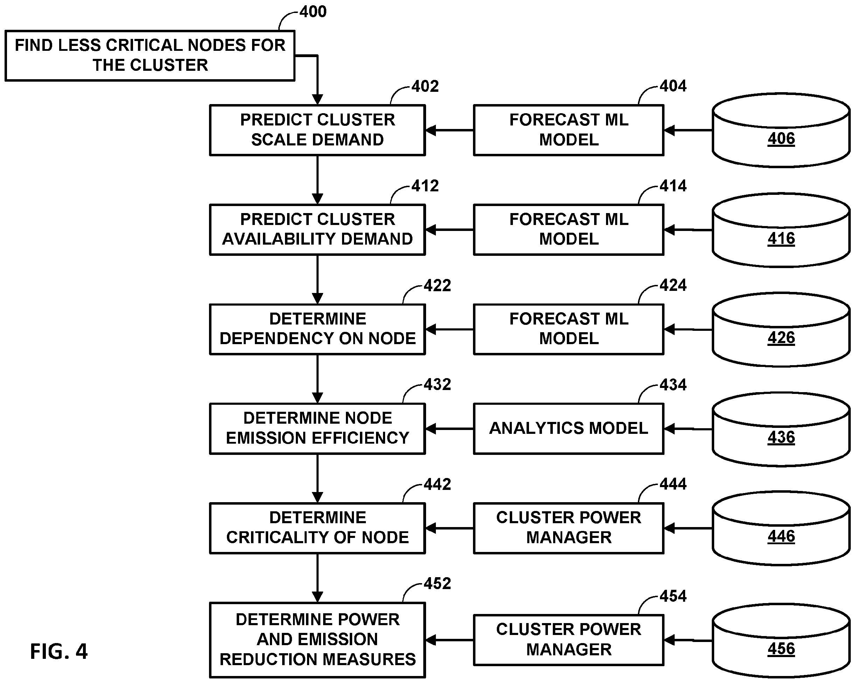

FIG. 4 is a flow diagram illustrating an example technique of determining power and/or emission reduction measures according to one or more aspects of this disclosure. For example, cluster power manager 328 may attempt to find less critical nodes for the cluster (e.g., 3 node cluster 300 of FIG. 3) (400). For example, cluster power manager 328 may predict cluster scale demand (402). Cluster scale demand may include a predicted number of total workloads needed to meet scale demand in the next time period T or a predicted difference between a current total number of workloads operating in the cluster and the predicted number of total workloads needed to meet scale demand in the next time period T. To predict the cluster scale demand, cluster power manager 328 may execute a forecasting machine learning model (404) on historical cluster replica count data (406).

Cluster power manager 328 may predict cluster availability demand (412). Cluster availability demand may be a number of standby replicas predicted to be needed in the next time period T. To predict the cluster availability demand, cluster power manager 328 may execute the forecasting machine learning model (414) on historical cluster standby replica data (416). Historical cluster standby replica data (416) may include standby replicas that are not torn down or destroyed, while historical cluster replica count data (406) may include replicas that are spawned and destroyed to handle increase or decreases in demand for a workload. At this point, cluster power manager 328 may determine whether or not the cluster is underutilized. For example, cluster power manager 328 may determine whether the cluster can scale up as predicted and support any predicted standby replicas with power savings options applied to one or more of the nodes of the cluster. For example, cluster power manager 328 may determine whether there are any "spare" nodes in the cluster. It should be noted that a "spare" node may be a node that is currently supporting one or more workloads. The use of the word "spare" in this context is meant to convey that other nodes in the cluster may be able to handle the predicted number of standby replicas and the number of workloads predicted to meet scale demands.

Cluster power manager 328 may determine dependency on node (422). Dependency on a node may be indicative of a number of workloads that are predicted to be scheduled to meet scale demands and a number of standby workloads that are predicted to be scheduled to meet availability demands. To determine a dependency on node, cluster power manager 328 may execute a forecasting machine learning model (424) on workload schedule metrics (426), to determine a node scale dependency factor (NSDF) and/or a node availability dependency factor (NADF).

Cluster power manager 328 may determine node emission efficiency (432). Node emission efficiency may include a node emission rate (NER) and/or a node resource utilization factor (NRU). The NER may be a measure of carbon emission attributed to the node. The NRU may be indicative of the utilization percentage of node compute resources (e.g., 50% of node compute resources are in use to support the workloads of the cluster). To determine node emission efficiency, cluster power manager 328 may execute an analytics model (434) to determine node emission rates based on workload emission rates (436).

Cluster power manager 328 (444) may determine criticality of a node (442). The criticality of a node may take the form of a weight (e.g., a node criticality weight or NCW) and may be based on, a node scale dependency factor (NSDF), node availability dependency factor (NADF), node carbon emission rate (NCER), and/or node resource utilization factor (NRU) for a node. To determine criticality of a node, cluster controller 320 may utilize dependency factors, node emission rates, etc. (446).

Cluster power manager 328 (454) may determine power and emission reduction measures (452). To determine power and emission reduction measures, cluster power manager 328 find carbon reduction measures for a node based on node criticality to the cluster from node criticality and emission reduction measures (456).

For example, cluster power manager 328 may predict a cluster spare node count, for example, using one or more machine learning models. For example, as part of predicting cluster scale demand (402), cluster power manager 328 may determine a cluster workload scalability factor (CWSF), which may be indicative of how many workload replicas are predicted to be created in next time period T (e.g., 1 hour) to meet scalability demands. For example, CWSF may equal a predicted total number of workload replicas to meet scalability demands during the next time period T. For example, as part of predicting cluster availability demand 412, cluster power manager 328 may also determine a cluster workload availability factor (CWAF), which may be indicative of how many workload replicas are predicted to be created in next time period T (e.g., 1 hour) to meet availability demands. For example, CWAF may equal a predicted total number of workload replicas to meet availability demands during the next time period T.

Cluster power manager 328 may store an indication of a resource specification for each workload. This resource specification may be indicative of how many processing cores are needed, how much memory is needed, etc., for a given workload. For example, such data is available for Kubernetes pods. Cluster power manager 328 may also store an indication of the capabilities of each node in a cluster. As such, cluster power manager 328 may determine the resource allocation needed to support the total predicted number of workloads, and determine or predict whether there are will be any spare nodes. In other words, cluster power manager 328 may determine whether the number of current nodes of the cluster is greater than a number of nodes (e.g., a minimum number of nodes) needed to support the total predicted number of workloads to be operating on the cluster during the next time period T. For example, cluster power manager 328 may then predict a number of spare nodes by determining a total count of cluster nodes minus the number of nodes required to meet scale and the availability demands. If there are spare nodes, cluster power manager 328 may determine node specific factors which cluster power manager 328 may use to determine which node(s) to apply power savings measure(s) to and which power savings measure(s) to use.

For example, cluster power manager 328 may determine one or more node dependency factors for each of the nodes of the cluster. For example, cluster power manager 328 may determine a node scale dependency factor (NSDF). In some examples, NSDF may be indicative of a number of workloads predicted to be scheduled on the node due to scale demands divided by the total number of cluster workloads. In some examples, the total number of workloads of the cluster used to determine NSDF is a total current number of workloads of the cluster. In other examples, the total number of workloads of the cluster used to determine NSDF is a predicted total number of workloads of the cluster for the next time period. For example, cluster power manager 328 may predict the NSDF using a machine learning model. For example, cluster power manager 328 may determine an NSDF for each of nodes 302A-302C.

Cluster power manager 328 may also determine a node availability dependency factor (NADF), which may be indicative of a number of workloads predicted to be scheduled on to the node due to availability demands divided by the total number of cluster workloads. For example, cluster power manager 328 may predict the NADF using a machine learning model. In some examples, the total number of workloads of the cluster used to determine NADF is a total current number of workloads of the cluster. In other examples, the total number of workloads of the cluster used to determine NADF is a predicted total number of workloads of the cluster for the next time period. For example, cluster power manager 328 may determine an NADF for each of nodes 302A-302C.

Cluster power manager 328 may determine a node carbon emission rate (NCER) which may represent an amount of emission attributed to the node per unit of time, such as per hour. For example, cluster power manager 328 may determine a node resource utilization factor (NRU) which may represent a percentage of node compute resources being used against available resources. For example, cluster power manager 328 may determine a NCER and NRU for each of nodes 302A-302C.

Cluster power manager 328 may determine whether there are any spare nodes (e.g., whether the number of spare nodes > 0). If there are spare nodes, cluster power manager 328 may determine a node criticality weight (NCW), which may be time bound. For example, cluster power manager 328 may determine the NCW based on the NCER and NRU. For example, cluster power manager 328 may use the following formula to determine the NCW:

$$NCW = NSDF * B1 + NADF * B2 + NCER * B3 + NRU * B4,$$

Where B 1, B2, B3, are B4 are beta coefficients in a regression analysis. Such beta coefficients may be input by a user or preconfigured, for example, using any standard formula.

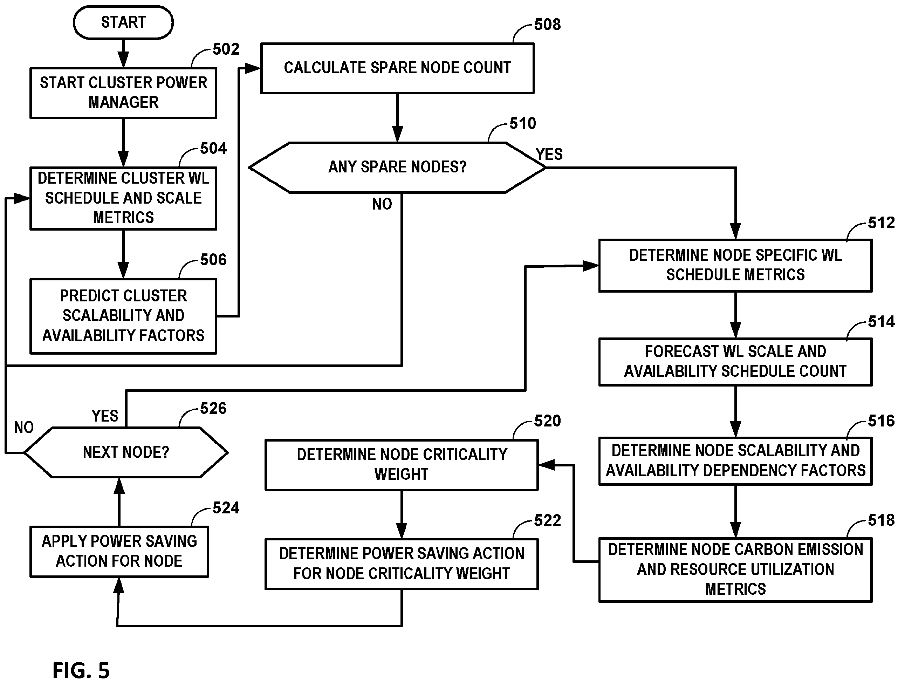

FIG. 5 is a flow diagram illustrating example cluster power management techniques according to one or more aspects of this disclosure. The techniques of FIG. 5 may be implemented by network controller 24, edge services controller 28, and/or any other device capable of performing such techniques.

Network controller 24 may start cluster power manager (502). For example, network controller 24 may start a cluster power manager (which may be an example of cluster power manager 328 of of FIG. 3) of cluster controller 320. Network controller 24 may determine cluster workload schedule and scale metrics (504) from memory. For example, network controller 24 may read the cluster workload schedule and scale metrics from one or more databases.

Network controller 24 may predict cluster scalability and availability factors (506). For example, network controller 24 may predict cluster scale demand 402 (e.g., CWSF) and predict cluster availability demand 412 (e.g., CWAF). Network controller 24 may calculate spare node count (508). The spare node count may be indicative of whether the cluster is underutilized. Network controller 24 may determine whether there are any spare nodes (510). If there are spare nodes (the "YES" path from box 510), network controller 24 may determine node specific workload schedule metrics (512) such as read the node specific workload schedule metrics from memory for a particular node of the cluster. Network controller 24 may forecast a node specific workload scale and availability schedule count (514). For example, network controller 24 may execute at least one machine learning model to forecast a number of workloads predicted to be scheduled on the node to meet scale demands and a number of workloads predicted to be scheduled on the node to meet availability demands for the particular node. Network controller 24 may determine a node scalability dependency factor (NSDF) and a node availability dependency factor (NADF) (516) for the particular node of the cluster. For example, network controller 24 may determine node carbon emission and resource utilization metrics (518) associated with the particular node.

Network controller 24 may determine a node criticality weight (520) for the particular node. Network controller 24 may determine a power savings action for the determined node criticality weight (522). For example, network controller 24 may look up in a lookup table the determined node criticality weight to determine an associated power savings action. Such a lookup table may be programmed by a user. Network controller 24 may apply the power savings action for the particular node (524). Network controller 24 may determine whether there is a next node (526). If there is a next node (the "YES" path from box 526, network controller 24 may return to box 512 to determine the node specific workload schedule and metrics for the next node. If there is not a next node (the "NO" path from box 526), network controller may return to box 504.

Moving the discussion back to box 510, if there are not any spare nodes (the "NO" path from box 510), network controller 24 may return to box 504.

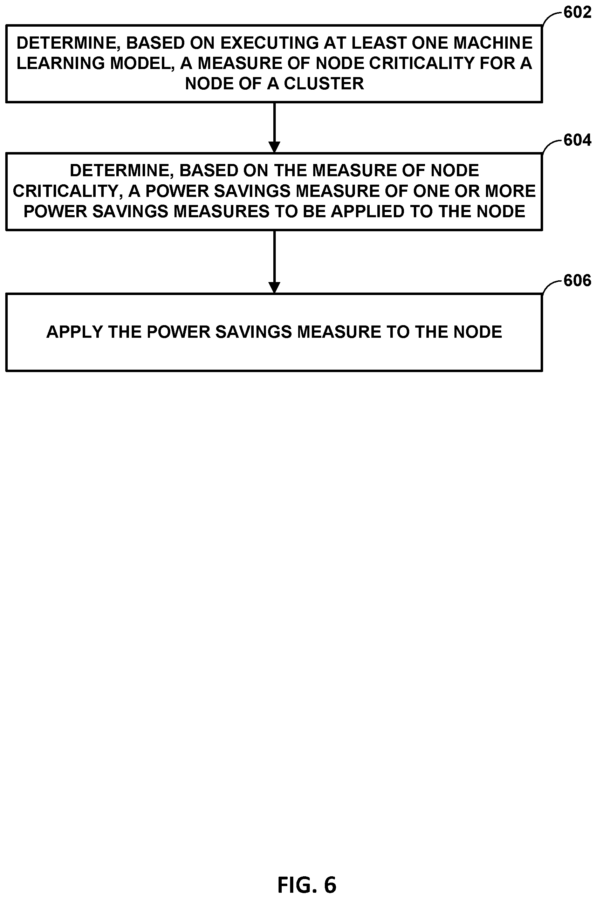

FIG. 6 is a flow diagram illustrating other example techniques for power management of cluster nodes according to one or more aspects of this disclosure. While the example of FIG. 6 is described with respect to network controller 24, the techniques of FIG. 6 may be performed by network controller 24, edge services controller 28, and/or any other device capable of performing such techniques.

Network controller 24 may determine, based on executing at least one machine learning model, a measure of node criticality for a node of a cluster (602). For example, network controller 24 may determine a node criticality weight for node 302A of nodes 302A-302C of a cluster based on one or more predictions associated with the node. Network controller 24 may determine, based on the measure of node criticality, a power savings measure of one or more power savings measures to be applied to the node (604). For example, network controller 24 may determine to apply a power savings measure to node 302A due to the node not being relatively critical, or being less critical than other nodes of the cluster.

Network controller 24 may apply the power savings measure to the node (606). For example, network controller 24 may implement the power savings measure or otherwise instruct node 302A to apply the power savings measure.

In some examples, the measure of node criticality includes a weight indicative of an impact on at least one of scalability or availability caused by taking one of the one or more power savings measures. For example, the measure of node criticality may be an NCW.

In some examples, network controller 24 may determine a corresponding measure of node criticality for each node of a cluster. For example, network controller 24 may repeat the techniques of FIG. 6 with respect to each node (e.g., nodes 302A-302C) of the cluster such that each node may be evaluated for potential power savings.

In some examples, network controller 24 may determine the measure of node criticality on a periodic basis. For example, network controller 24 may periodically repeat the techniques of FIG. 6. As such, network controller 24 may make any power savings based changes to the operation of the cluster in a time bound manner, based on predictions for a next time period T.

In some examples, to determine the measure of node criticality, network controller 24 may determine a measure of a total number of predicted workloads to be scheduled on the node during a prediction window. In some examples, the measure of the total number of predicted workloads to be scheduled on the node includes a node scalability dependency factor indicative of a number of workloads predicted to be scheduled on the node during the prediction window due to scale demands and a node availability dependency factor indicative of a number of workloads predicted to be scheduled on the node during the prediction window due to availability demands. In some examples, the node scalability dependency factor includes the number of workloads predicted to be scheduled on the node during the prediction window due to scale demands divided by a total number of workloads for the cluster. In some examples, the node availability dependency factor includes the number of workloads predicted to be scheduled on the node during the prediction window due to availability demands divided by the total number of workloads for the cluster.

In some examples, to determine the measure of node criticality, network controller 24 may determine a measure of node carbon emission for the node, the measure of node carbon emission being indicative of an amount of carbon emission per a unit of time attributable to the node and determine a measure of node resource utilization for the node, the measure of node resource utilization being indicative of a percentage of node resources that are utilized.

In some examples, network controller 24 may, prior to determining the measure of node criticality, determine a spare node count, wherein the spare node count is indicative of a number of nodes of the cluster that are not necessary to meet predicted workloads of the cluster. In some examples, network controller 24 may determine that the spare node count is greater than zero, wherein determining the measure of node criticality is based on the determination that the spare node count is greater than zero.

In some examples, to determine the measure of node criticality, network controller 24 may determine at least one of scalability or availability metrics. In some examples, the scalability or availability metrics include at least one of: a server utilization of the node, the server utilization of the node comprising a utilization percentage of node resources against a capacity of the node; a carbon emission rate of node, the carbon emission rate of the node comprising an indication of an amount of carbon emission attributed to the node per a unit of time; a workload scale factor, the workload scale factor being indicative of a number of service replicas predicted to be spawned in a prediction window; or a workload availability factor, the workload availability factor being indicative of a number of standby replicas predicted to be spawned in the prediction window.

In some examples, to determine the measure of node criticality, network controller 24 may, based on the at least one of scalability or availability metrics, determine at least one node dependency factor metric. In some examples, the at least one node dependency factor metric includes a node scalability dependency factor, the node scalability dependency factor being indicative of a number of workloads that are predicted to be scheduled on the node in the prediction window to achieve respective scalability goals associated with the workloads; or a node availability dependency factor, the node availability dependency factor being indicative of a number of workloads that are predicted to be scheduled on the node in the prediction window to achieve respective availability goals associated with the workloads.

In some examples, the one or more power savings measures include at least one of: shutting down at least one network interface card of the node; lowering a frequency of at least processor core of the node; or moving the at least one processor core of the node into a different power optimized state.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. A computer-readable medium may take the form of a computer readable data storage medium and/or a computer readable transmission medium.

For example, a computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

In some examples, a computer-readable data storage medium may comprise non-transitory media. The term "non-transitory" may indicate that the storage medium is not embodied in a carrier wave or a propagated signal. In certain examples, a non-transitory storage medium may store data that can, over time, change (e.g., in RAM or cache). The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described example power management devices and techniques. An example computing device include one or more memories and one or more processors. The one or more processors are configured to determine, based on executing of at least one machine learning model, a measure of node criticality for a node of a cluster. The one or more processors are configured to determine, based on the measure of node criticality, a power savings measure of one or more power savings measures to be applied to the node. The one or more processors are configured to apply the power savings measure to the node.

Further examples are set out in the following numbered clauses.

Clause 1. A computing device comprising: one or more memories; and one or more processors communicatively coupled to the one or more memories, the one or more processors being configured to: determine, based on executing at least one machine learning model, a measure of node criticality for a node of a cluster; determine, based on the measure of node criticality, a power savings measure of one or more power savings measures to be applied to the node; and apply the power savings measure to the node.

Clause 2. The computing device of clause 1, wherein the measure of node criticality comprises a weight indicative of an impact on at least one of scalability or availability caused by taking one of the one or more power savings measures.

Clause 3. The computing device of clause 1 or 2, wherein the one or more processors are configured to determine a corresponding measure of node criticality for each node of the cluster.

Clause 4. The computing device of any of clauses 1-3, wherein the one or more processors are configured to determine the measure of node criticality on a periodic basis.

Clause 5. The computing device of any of clauses 1-4, wherein to determine the measure of node criticality, the one or more processors are configured to determine a measure of a total number of predicted workloads to be scheduled on the node during a prediction window.

Clause 6. The computing device of clause 5, wherein the measure of the total number of predicted workloads to be scheduled on the node comprises a node scalability dependency factor indicative of a number of workloads predicted to be scheduled on the node during the prediction window due to scale demands and a node availability dependency factor indicative of a number of workloads predicted to be scheduled on the node during the prediction window due to availability demands.

Clause 7. The computing device of clause 6, wherein the node scalability dependency factor comprises the number of workloads predicted to be scheduled on the node during the prediction window due to scale demands divided by a total number of workloads for the cluster, and wherein the node availability dependency factor comprises the number of workloads predicted to be scheduled on the node during the prediction window due to availability demands divided by the total number of workloads for the cluster.

Clause 8. The computing device of any of clauses 1-7, wherein to determine the measure of node criticality, the one or more processors are configured to: determine a measure of node carbon emission for the node, the measure of node carbon emission being indicative of an amount of carbon emission per a unit of time attributable to the node; and determine a measure of node resource utilization for the node, the measure of node resource utilization being indicative of a percentage of node resources that are utilized.

Clause 9. The computing device of any of clauses 1-8, wherein the one or more processors are further configured to: prior to determining the measure of node criticality, determine a spare node count, wherein the spare node count is indicative of a number of nodes of the cluster that are not necessary to meet predicted workloads of the cluster, and determine that the spare node count is greater than zero, wherein determining the measure of node criticality is based on the determination that the spare node count is greater than zero.

Clause 10. The computing device of any of clauses 1-9, wherein to determine the measure of node criticality, the one or more processors are configured to determine at least one of scalability or availability metrics, the scalability or availability metrics comprising at least one of: a server utilization of the node, the server utilization of the node comprising a utilization percentage of node resources against a capacity of the node; a carbon emission rate of node, the carbon emission rate of the node comprising an indication of an amount of carbon emission attributed to the node per a unit of time; a workload scale factor, the workload scale factor being indicative of a number of service replicas predicted to be spawned in a prediction window; or a workload availability factor, the workload availability factor being indicative of a number of standby replicas predicted to be spawned in the prediction window.

Clause 11. The computing device of clause 10, wherein to determine the measure of node criticality, the one or more processors are configured to, based on the at least one of scalability or availability metrics, determine at least one node dependency factor metric, the at least one node dependency factor metric comprising: a node scalability dependency factor, the node scalability dependency factor being indicative of a number of workloads that are predicted to be scheduled on the node in the prediction window to achieve respective scalability goals associated with the workloads; or a node availability dependency factor, the node availability dependency factor being indicative of a number of workloads that are predicted to be scheduled on the node in the prediction window to achieve respective availability goals associated with the workloads.

Clause 12. The computing device of any of clauses 1-11, wherein the one or more power savings measures comprise at least one of: shutting down at least one network interface card of the node; lowering a frequency of at least one processor core of the node; or moving the at least one processor core of the node into a different power optimized state.

Clause 13. A method comprising: determining, by one or more processors and based on executing of at least one machine learning model, a measure of node criticality for a node of a cluster; determining, by the one or more processors and based on the measure of node criticality, a power savings measure of one or more power savings measures to be applied to the node; and applying, by the one or more processors, the power savings measure to the node.

Clause 14. The method of clause 13, wherein the measure of node criticality comprises a weight indicative of an impact on at least one of scalability or availability caused by taking one of the one or more power savings measures.

Clause 15. The method of clause 13 or 14, wherein the method comprises determining, by the one or more processors, corresponding measure of node criticality for each node of a cluster.

Clause 16. The method of any of clauses 13-15, wherein determining the measure of node criticality comprises determining a measure of a total number of predicted workloads to be scheduled on the node during a prediction window.

Clause 17. The method of any of clauses 13-16, wherein determining the measure of node criticality comprises: determining a measure of node carbon emission for the node, the measure of node carbon emission being indicative of an amount of carbon emission per a unit of time attributable to the node; and determining a measure of node resource utilization for the node, the measure of node resource utilization being indicative of a percentage of node resources that are utilized.

Clause 18. The method of any of clauses 13-17, further comprising: determining, by the one or more processors and prior to determining the measure of node criticality, a spare node count, wherein the spare node count is indicative of a number of nodes of the cluster that are not necessary to meet predicted workloads of the cluster, and determining by the one or more processors, that the spare node count is greater than zero, wherein determining the measure of node criticality is based on the determination that the spare node count is greater than zero.

Clause 19. The method of any of clauses 13-18, wherein the one or more power savings measures comprise at least one of: shutting down at least one network interface card of the node; lowering a frequency of at least one processor core of the node; or moving the at least one processor core of the node into a different power optimized state.

Clause 20. A computer-readable medium comprising instructions which, when executed, cause one or more processors to: determine, based on executing of at least one machine learning model, a measure of node criticality for a node of a cluster; determine, based on the measure of node criticality, a power savings measure of one or more power savings measures to be applied to the node; and apply the power savings measure to the node.

**Claims**

1. A computing device comprising:

   one or more memories; and
   one or more processors communicatively coupled to the one or more memories, the one or more processors being configured to:

      determine, based on executing at least one machine learning model, a measure of node criticality for a node of a cluster;
      determine, based on the measure of node criticality, a power savings measure of one or more power savings measures to be applied to the node; and
      apply the power savings measure to the node.

2. The computing device of claim 1, wherein the measure of node criticality comprises a weight indicative of an impact on at least one of scalability or availability caused by taking one of the one or more power savings measures.

3. The computing device of any of claims 1-2, wherein the one or more processors are configured to determine a corresponding measure of node criticality for each node of the cluster.

4. The computing device of any of claims 1-3, wherein the one or more processors are configured to determine the measure of node criticality on a periodic basis.

5. The computing device of any of claims 1-4, wherein to determine the measure of node criticality, the one or more processors are configured to determine a measure of a total number of predicted workloads to be scheduled on the node during a prediction window.

6. The computing device of claim 5, wherein the measure of the total number of predicted workloads to be scheduled on the node comprises a node scalability dependency factor indicative of a number of workloads predicted to be scheduled on the node during the prediction window due to scale demands and a node availability dependency factor indicative of a number of workloads predicted to be scheduled on the node during the prediction window due to availability demands.

7. The computing device of claim 6, wherein the node scalability dependency factor comprises the number of workloads predicted to be scheduled on the node during the prediction window due to scale demands divided by a total number of workloads for the cluster, and wherein the node availability dependency factor comprises the number of workloads predicted to be scheduled on the node during the prediction window due to availability demands divided by the total number of workloads for the cluster.

8. The computing device of any of claims 1-7, wherein to determine the measure of node criticality, the one or more processors are configured to:

   determine a measure of node carbon emission for the node, the measure of node carbon emission being indicative of an amount of carbon emission per a unit of time attributable to the node; and
   determine a measure of node resource utilization for the node, the measure of node resource utilization being indicative of a percentage of node resources that are utilized.

9. The computing device of any of claims 1-8, wherein the one or more processors are further configured to:

   prior to determining the measure of node criticality, determine a spare node count, wherein the spare node count is indicative of a number of nodes of the cluster that are not necessary to meet predicted workloads of the cluster, and
   determine that the spare node count is greater than zero, wherein determining the measure of node criticality is based on the determination that the spare node count is greater than zero.

10. The computing device of any of claims 1-9, wherein to determine the measure of node criticality, the one or more processors are configured to determine at least one of scalability or availability metrics, the scalability or availability metrics comprising at least one of:

   a server utilization of the node, the server utilization of the node comprising a utilization percentage of node resources against a capacity of the node;
   a carbon emission rate of node, the carbon emission rate of the node comprising an indication of an amount of carbon emission attributed to the node per a unit of time;
   a workload scale factor, the workload scale factor being indicative of a number of service replicas predicted to be spawned in a prediction window; or
   a workload availability factor, the workload availability factor being indicative of a number of standby replicas predicted to be spawned in the prediction window.

11. The computing device of claim 10, wherein to determine the measure of node criticality, the one or more processors are configured to, based on the at least one of scalability or availability metrics, determine at least one node dependency factor metric, the at least one node dependency factor metric comprising:

   a node scalability dependency factor, the node scalability dependency factor being indicative of a number of workloads that are predicted to be scheduled on the node in the prediction window to achieve respective scalability goals associated with the workloads; or
   a node availability dependency factor, the node availability dependency factor being indicative of a number of workloads that are predicted to be scheduled on the node in the prediction window to achieve respective availability goals associated with the workloads.

12. The computing device of any of claims 1-11, wherein the one or more power savings measures comprise at least one of:

   shutting down at least one network interface card of the node;
   lowering a frequency of at least one processor core of the node; or
   moving the at least one processor core of the node into a different power optimized state.

13. A method comprising:

   determining, by one or more processors and based on executing of at least one machine learning model, a measure of node criticality for a node of a cluster;
   determining, by the one or more processors and based on the measure of node criticality, a power savings measure of one or more power savings measures to be applied to the node; and
   applying, by the one or more processors, the power savings measure to the node.

14. The method of claim 13, further comprising steps corresponding to the functionality recited in any of claims 2-12.

**15.** A computer-readable medium comprising instructions that, when executed by one or more programmable processors, cause the one or more programmable processors to perform the method recited by any of claims 13-14.

FIG. 1

FIG. 2

COMPUTING DEVICE
200

NETWORK INTERFACE CARD
230

232

MEMORY
227

PROCESSING CIRCUITRY
231

25

241

ESP AGENT
236

SERVICES
233

KERNEL
237

ETHERNET BRIDGE
234

242

USER SPACE
245

VIRTUAL NIC(S)
229

VIRTUAL MACHINE(S)
228

VIRTUAL ROUTER
220

NFT
222A

NFT
222N

PHYSICAL DRIVER
225

KERNEL SPACE
243

HYPERVISOR
214

MEMORY
244

DISK
246

MICROPROCESSOR
210

EP 4 521 198 A2

FIG. 3

EP 4 521 198 A2

**400** FIND LESS CRITICAL NODES FOR THE CLUSTER

**402** PREDICT CLUSTER SCALE DEMAND

**404** FORECAST ML MODEL

**406**

**412** PREDICT CLUSTER AVAILABILITY DEMAND

**414** FORECAST ML MODEL

**416**

**422** DETERMINE DEPENDENCY ON NODE

**424** FORECAST ML MODEL

**426**

**432** DETERMINE NODE EMISSION EFFICIENCY

**434** ANALYTICS MODEL

**436**

**442** DETERMINE CRITICALITY OF NODE

**444** CLUSTER POWER MANAGER

**446**

**452** DETERMINE POWER AND EMISSION REDUCTION MEASURES

**454** CLUSTER POWER MANAGER

**456**

FIG. 4

FIG. 5

```
                                                                        ┌─602
┌────────────────────────────────────────────────────────────────────┐
│          DETERMINE, BASED ON EXECUTING AT LEAST ONE MACHINE          │
│        LEARNING MODEL, A MEASURE OF NODE CRITICALITY FOR A           │
│                         NODE OF A CLUSTER                            │
└────────────────────────────────────────────────────────────────────┘
                                   │
                                   ▼
                                                                        ┌─604
┌────────────────────────────────────────────────────────────────────┐
│             DETERMINE, BASED ON THE MEASURE OF NODE                  │
│        CRITICALITY, A POWER SAVINGS MEASURE OF ONE OR MORE           │
│        POWER SAVINGS MEASURES TO BE APPLIED TO THE NODE              │
└────────────────────────────────────────────────────────────────────┘
                                   │
                                   ▼
                                                                        ┌─606
┌────────────────────────────────────────────────────────────────────┐
│             APPLY THE POWER SAVINGS MEASURE TO THE NODE              │
└────────────────────────────────────────────────────────────────────┘
```

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 75948524
- IN 202341060929
- US 2013044378 W
- US 22650914